# EUROPEAN PATENT SPECIFICATION

(11) **EP 3 270 819 B1**
(45) Date of publication and mention of the grant of the patent: **27.02.2019**
(21) Application number: 16716721.2
(22) Date of filing: 14.03.2016
(51) Int. Cl.: A61C 13/00

(54) **A METHOD OF MAKING A DENTAL RESTORATION**
VERFAHREN ZUR HERSTELLUNG EINES ZAHNERSATZES
PROCÉDÉ DE FABRICATION D'UNE RESTAURATION DENTAIRE

(30) Priority: 20.03.2015 EP 15159994
(43) Date of publication of application: 24.01.2018
(73) Proprietor: 3M Innovative Properties Company, St. Paul, MN 55133-3427 (US)
(72) Inventor: KIRCHNER, Bastian P., 82229 Seefeld (DE); MEURER, Till, 53111 Bonn (DE)
(74) Representative: Hohmann, Arno
(86) International application number: PCT/US2016/022250
(87) International publication number: WO 2016/153830

(56) References cited:
- EP-A2- 2 363 094
- US-A1- 2003 207 235
- US-A1- 2014 372 085

## Description

### Field of the Invention

The invention relates to method of making a dental restoration, in particular to a method in which a full contour dental restoration which incisal portion is locally reduced for adding a portion of, preferably translucent, dental material.

### Background

Dental restorations, in particular larger dental restorations like replacement teeth, crowns or bridges, for example, can be made in different configurations depending on a variety of criteria. Such criteria include for example the desired aesthetics, costs, preparation time or capabilities of a selected manufacturer.

Many dental restorations are made as a two or more component configuration, with the individual components providing different characteristics for the restoration. A common two-component configuration includes a dental restoration prepared from a framework which is provided with a veneer. The framework typically provides the dental restoration with a good mechanical stability and the veneer typically provides the dental restoration with the desired good aesthetics. Typically the framework and the veneer are made of different base materials, for example ceramic and glass-ceramic, each being selected in accordance with the desired function of the respective component.

Other dental restorations are made of a single component only and are often referred to as monolithic dental restorations in the field of dentistry. Such monolithic dental restorations typically are made of one mechanically stable material, for example a ceramic material, and do not have an additional veneer.

From monolithic dental restorations so-called all-ceramic restorations have become relatively common. Such monolithic all-ceramic restorations may be manufactured from ceramic blocks. The ceramic material these blocks are made of may be provided at a final stage, for example sintered or cast to final density prior to grinding, so that the dental restoration is ready to use directly after grinding which eventually includes a final polishing step. Suitable ceramic blocks are commercially available at different pre-determined tooth colors so that the desired color of the dental restoration can be determined by selecting a block having the appropriate color.

US 2003/0207235 A1 discloses a method for producing an artificial tooth using a CAD-CAM system and acquiring an image of a natural tooth to be replaced by the artificial tooth. A base layer is constructed to a shape and dimensions fixed for the artificial tooth and reduced by a surface portion corresponding to the thickness of a cover layer to be applied according to determined colour characteristics acquired by the image and to correspond with the appearance of the natural tooth to be replaced . The artificial tooth is manufactured using a computer aided manufacturing system. Although current approaches for manufacturing of monolithic dental restorations provide a variety of advantages, there is still a desire for a method allowing the manufacturing of individually colored monolithic dental restorations at a cost efficient manner and at a good aesthetic quality.

### Summary of the Invention

The invention relates to a method of making a dental restauration according to claim 1.

Although monolithic dental restorations may be provided in different colors which closely resemble natural tooth colors, the monolithic dental restorations have limitations in resembling the translucency gradation of natural teeth. Especially if a ceramic material (as opposed to a more translucent glass ceramic material) is used for making the dental restoration there are limitations to replicate relatively translucent portions of the tooth. In prior art approaches dental veneers are often used to replicate an outer shell of a tooth. Such prior art approaches are however in contradiction to the approach monolithic dental restorations are based on.

The invention is advantageous in that is enables the manufacturing of a dental restoration, for example a dental crown or bridge, to a pre-dominant extent monolithically but still at a relatively high level of optical quality. In particular, the method of the invention allows the dental restoration to be manufactured monolithically including the portion forming the anatomic equator. Thus those portions of the dental restoration which must precisely fit between teeth of the patient's dentition can be manufactured by automatic processes. Further, the invention allows a manual finishing step in which such precisely fitting portions of the dental restoration are not affected. Further the invention helps minimizing the amount and magnitude of any necessary manual steps. In addition, due to the recessing the invention provides an indication of the position of any dental enamel material to be applied for finishing the dental restoration, and therefore facilitates the making of dental restorations.

In one embodiment the step of recessing is based on three-dimensionally subtracting the incisal portion model from the dental restoration model. The three-dimensional incisal portion model may in two dimensions be based on a two-dimensional incisal area model and in the third dimension on a predetermined offset of the incisal area model. Although the third dimension is based on a predetermined offset, the resulting three-dimensional three-dimensional virtual model is defined herein as the "three-dimensional virtual model of an anterior incisal portion of a patient's tooth". The skilled person will recognize that the anterior incisal portion as defined herein may have a thickness (in the third dimension) that is not provided by the natural tooth but that may be predetermined. The skilled person will further recognize that although the thickness of the anterior incisal portion is predetermined, the resulting three-dimensional portion still relates to a three-dimensional portion of the patient's tooth.

In one embodiment the method further comprises the step of capturing an image of the patient's tooth. In particular the method may comprise the step of capturing a two-dimensional image of the labial side of the patient's tooth. The image may be captured by a camera which is configured to take planar two-dimensional pictures. More preferable, the image is captured by a translucency measuring device which is configured to take two-dimensional landscapes of translucency from a captured object. Such a translucency measuring device is available under the designation SpectroShade™ from the company Medical High Technologies, Italy. The image may also be captured by a camera which is configured to capture three-dimensional pictures.

In a further embodiment the method comprises the step of creating the incisal area model based on the image of the patient's tooth. Such incisal area model is preferably a two-dimensional virtual model of the incisal labial surface of the tooth. The incisal area typically extends from the incisal edge toward the anatomic equator of the tooth, but does not reach the anatomic equator.

In a further embodiment the method comprises the step of recognizing different translucency areas of the tooth, in particular the side of the tooth captured or to be captured. Based thereon the incisal area model may be determined. The different translucency areas may be determined from the image that was captured or

For recognizing different translucency areas a translucency measuring device may be used. Such a translucency measuring device is preferably configured to provide a two-dimensional translucency landscape of a measured object, for example of the captured tooth. In a further embodiment the method further comprises the step of manually delineating an image of the incisal area of the patient's tooth. The method may further comprise capturing the delineated image by means of a camera.

In a further embodiment the method further comprises the step of capturing a three-dimensional virtual model of at least a part of the patient's dentition. The patient's dentition may for example be intra-orally scanned or scanned from a physical model of the patient's dentition.

In one embodiment the method further comprises the step of designing the dental restoration model by computer aid. The design is preferably based on the patient's dentition model. For example the patient's dentition model may be displayed in a dental CAD system. A user of the dental CAD system can therefore design the dental restoration such that it fits between teeth adjacent and opposite of the tooth to be restored.

In one embodiment the design of the dental restoration model is based on a model of a tooth to be restored within the patient's dentition model, and wherein the tooth to be restored is a neighboring or opposing tooth of the patient's tooth which the incisal portion model is based on. Accordingly, preferably the dental restoration model relates to a different tooth than the incisal portion model is derived from.

In one embodiment the method further comprises the steps of transmitting data representative of the reduced dental restoration model to a machine for manufacturing dental restorations. The method may comprise the step of manufacturing a dental restoration precursor based on the data. Such a dental restoration precursor may have an open-celled material structure and may be sintered to form the reduced dental restoration. A dental restoration precursor may for example be made of adjoining ceramic particles. Alternatively, the method may comprise the step of manufacturing the reduced dental restoration based on the data. Such a reduced dental restoration may have its final material structure, and may for example be made of a hardened resin or a sintered ceramic material. The step of manufacturing may be performed by a material build-up or a material removal process. Preferably, the reduced dental restoration at its final stage is monolithic.

In one embodiment the method further comprises the step of providing a dental ceramic material selected from among a zirconium oxide or aluminum oxide material. Such a dental ceramic material may for example comprise between 90 and 99 % by weight zirconium oxide, and preferably 91 to 97.25 % by weight zirconium oxide. The dental ceramic material may further comprise 0 - 1 % by weight aluminium oxide.

The dental ceramic material may alternatively be based on aluminium oxide, meaning the ceramic material may comprise 90 to 99 % by weight aluminium oxide and 0 to 1% by weight zirconium oxide.

Further the dental ceramic material may comprise 0 - 10% by weight of at least one of hafnium oxide, yttrium oxide and oxides from gallium, germanium, and indium. The dental ceramic material may further comprise 0.0005 to 1.5% by weight of coloring additives, selected from the group consisting of the oxides Fe₂O₃, Er₂O₃ and/or MnO₂. Dental ceramic material is generally selected to be compatible for use in human bodies.

In a further embodiment the method further comprises the step of sintering the dental restoration precursor and thereby providing a sintered dental restoration precursor.

In one embodiment the method further comprises the step of manually adding a material layer to the reduced dental restoration. Thus the reduced dental restoration is provided with an incisal layer, and thereby the dental restoration is created. The added material layer is preferably made of a polymer based dental enamel material, for example a powder and liquid polymethyl methacrylate (PMMA) material. Such a material is for example available under the designation Sinfony™ from the company 3M Deutschland GmbH, Germany.

### Brief Description of the Figures

- Fig. 1: is a view on the labial side of anterior teeth in a patient's mouth;
- Fig. 2: illustrates the capturing of an image of a reference tooth of the patient's dentition in a method according to an embodiment of the invention;
- Fig. 3: illustrates the preparation of an image of a reference tooth of the patient's dentition in a method according to a further embodiment of the invention;
- Fig. 4: is a view of an incisal area of the patient's reference tooth according to an embodiment of the invention;
- Fig. 5: is a view on the labial side of the dental restoration with the incisal area superposed according to an embodiment of the invention;
- Fig. 6: is a view on the labial side of a virtual model of a reduced dental restoration according to an embodiment of the invention; and
- Fig. 7: is a view on the labial side of the final dental restoration according to an embodiment of the invention.

### Detailed Description of the Invention

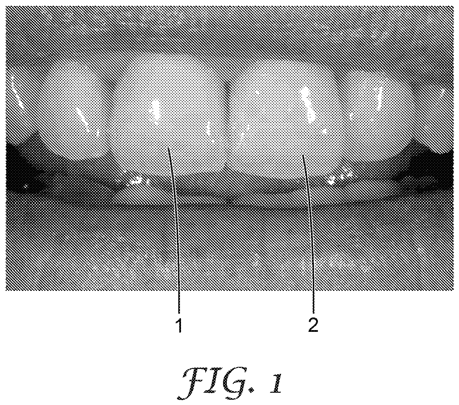

Fig. 1 shows some of a patient's teeth with a tooth to be restored 1 and a reference tooth 2. For the purpose of describing the invention the tooth to be restored is illustrated in the example as being present as a whole, whereas in practice the tooth to be restored or several teeth to be restored may be partially or entirely decayed or missing.

According to the invention the reference tooth 2 is preferably used as a sample for making a similar dental restoration with respect to the optical appearance, in particular with respect to coloring and translucency. As a reference tooth desirably a neighboring or opposing tooth of the tooth to be restored is selected to achieve a close optical similarity between the dental restoration and surrounding teeth. However in cases in which the tooth to be restored is still present to a sufficient extent the tooth to be restored may be selected itself as a reference tooth.

While the optical appearance of the dental restoration may be approximated based on a neighboring or opposing tooth, the three-dimensional outer shape of the dental restoration must be determined for example accounting for the available space between neighboring and opposing teeth and for occlusal requirements. For determination of the shape of a dental restoration there are various different methods available in the field of dentistry.

According to the invention the dental restoration is preferably designed by a user using a dental CAD system. The CAD system is may be configured to store a three-dimensional virtual model of at least part of a patient's dentition. Such a virtual dentition model may for example be obtained from a scan of the patient's teeth or a physical model thereof. The CAD system may further be connectable to a database holding different virtual models of standard tooth shapes. These standard tooth models may be retrieved from the database and modified by CAD tools to make up a virtual model of the dental restoration which fits in the desired place within the virtual dentition model. Instead of using a database the dental restoration may further be entirely or partly drafted by the user manually in the CAD system.

Once the virtual dental restoration model is determined in its final outer shape an incisal portion is preferably determined and virtually recessed as further described in the following.

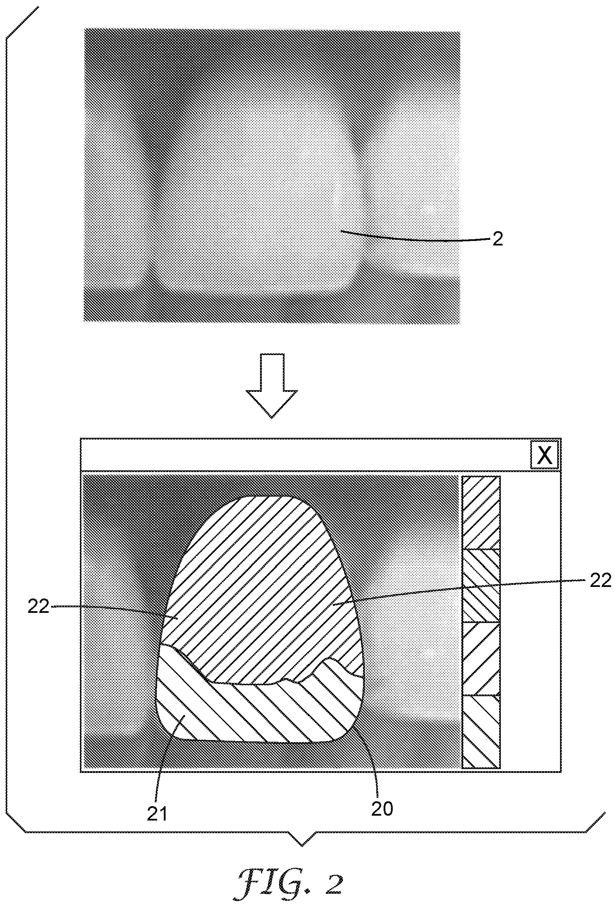

Fig. 2 shows an enlarged view on the reference tooth 2. The labial side of the reference tooth 2 is captured by a translucency measuring device (not shown). The translucency measuring device captures a two-dimensional bit map data image of the labial side of the reference tooth 2. The data stored in the bit map are representative of optical information (for example color, intensity etc.) at determined positions of the captured reference tooth 2 and are interpreted as translucency. Pixels of the bit map having a translucency within a certain predetermined range of translucencies are interpreted to belong to an incisal area of the reference tooth 2. Accordingly the individual pixels are posterized or grouped to form a larger area or larger areas which is/are indicative of an incisal area of the reference tooth 2. This can be performed by software running in the translucency measuring device or on a computer connected to it. In the example an incisal area 21 is identified. Optionally an adjacent base area 22 may be identified in a similar way by posterizing pixels of a translucency within a different predetermined second range of translucencies. The range or ranges of translucency may be adjustable, for example by user input.

The software may be further configured to automatically eliminate single or view pixels of mismatching translucencies in larger areas of similar translucencies. This helps minimizing any effects from measuring tolerances and optical errors. The incisal area 21 and the base area 22 may be displayed to a user within an overall tooth area 20. The software may enable a user modification of the incisal area 21, the base area 22 and or the tooth area 20, in particular of the boundaries of the individual areas 20, 21 and 22. The software may further be configured such that a user can eliminate or move any areas that have been erroneously identified.

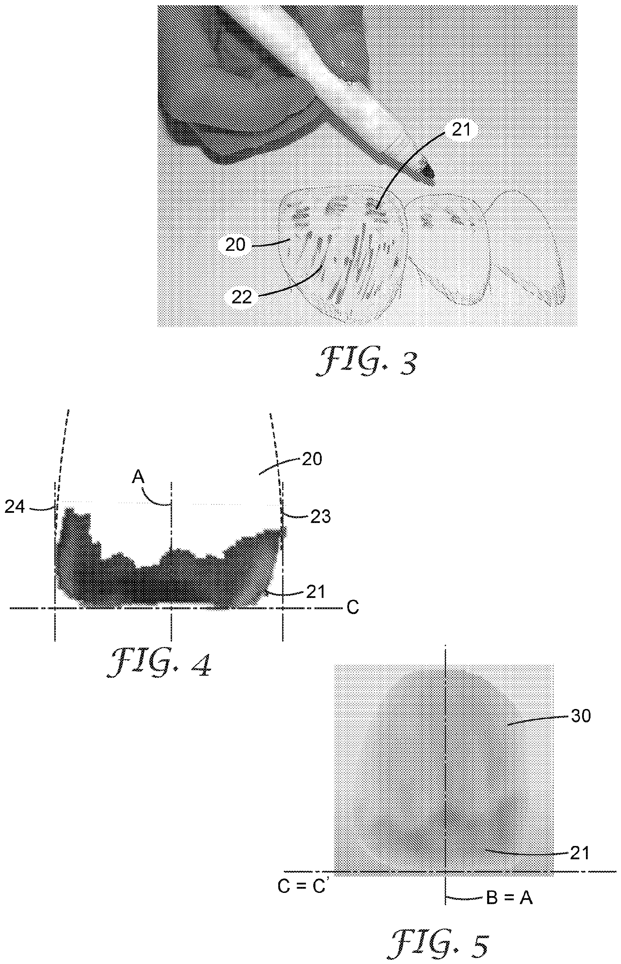

Fig. 3 illustrates a way of manually identifying the incisal area 21 and optionally the base area 22 of the labial side of the reference tooth 2. In the example the tooth area 20 of the reference tooth 2 is drawn manually on a piece of paper, but may in another example by based on a computer image, for example on a print of the image shown in Fig. 2.
The so tooth area 20 may be scanned in a computer with software that is configured for recognition of at least the incisal area 21. Automatic recognition of the incisal area 21 and optionally the base area 22 may for example be based on color recognition. In this case the incisal area 21 and the base area 22 may be drawn or outlined in different colors in the tooth area 20. Other recognition methods are possible, for example based on pattern recognition.

Fig. 4 shows the incisal area 21 isolated from the tooth area. The incisal area 21 is stored in a computer, preferably one which runs or is capable of running a dental CAD software, in the form of two-dimensional information. The incisal area 21 may be displayed on a computer screen. Further, the incisal area 21 has a tooth axis or first center axis A. The first center axis A may be determined by defining the symmetry axis between the distal margin 23 and the mesial margin 24 of the reference tooth or the tooth area 20. This may be performed by software or manually by a user. The distal margin 23 and the mesial margin 24 each may be defined by a tangent to the respective distal side and mesial side, for example through the so-called anatomic equator of the tooth or through manually determined points at the distal side and mesial side. The incisal area 21 has further a first incisal edge line C. The first incisal edge line C extends essentially transverse to the center axis and essentially parallel to the incisal side of the reference tooth or tooth area 20 through at least one point of the margin of the incisal area 21. The computer is further preferably configured to superimpose the incisal area 21 with a three-dimensional virtual model of a dental restoration as shown in Fig. 5.

Fig. 5 shows the incisal area 21 superimposed on the outer labial surface of a dental restoration model 30. To superimpose the two-dimensional incisal area 21 with the three-dimensional dental restoration model the incisal area 21 is projected onto the labial side of the dental restoration model 30. The projection of the incisal area 21 to the dental restoration model 30 can be performed mathematically by the software. Thereby the two-dimensional incisal area 21 is mathematically arranged parallel in relation to a lingual/labial plane of the dental restoration's coordinate system. The lingual/labial plane is defined between the lingual side and the opposite labial side of the dental restoration and extends essentially parallel to both, the lingual and labial side. Further, the incisal area 21 may be centered on the labial side of the dental restoration with respect to mesial and distal sides of the dental restoration. This may be performed by aligning the first center axis A of the incisal area 21 with a second center axis B of the dental restoration model. The incisal area 21 is further preferably aligned with a second incisal edge line C' of the dental restoration. It is noted that the incisal area 21 is derived from the reference tooth, whereas the dental restoration model is designed to replace the tooth to be restored. Accordingly the incisal area 21 and the dental restoration model relate to two different teeth of the patient and therefore typically do not exactly match in shape with each other. In particular if the incisal area 21 is aligned with its first center axis A to the second center axis B of the dental restoration the first incisal edge line C may not be exactly parallel to the second incisal edge line C'. In this case the incisal area 21 may be aligned with the second incisal edge line C' by approximation, for example, such that the first and second incisal edge line C, C' cross at or around the first and/or second center axis A, B. Further, the software is preferably configured to allow the incisal area to be mirrored, for example about the first center axis. Thus, if a certain tooth in one quadrant of the patient's dentition is to be restored the corresponding tooth in the respective other quadrant may be used as reference tooth. For example for a tooth 1 2 (1^{st} quadrant, 2^{nd} tooth) the tooth 2 2 (2^{nd} quadrant, 2^{nd} tooth) may be used as reference tooth.

In addition, the software is preferably configured for scaling (enlarging or reducing) the incisal area 21 for adapting it to the size dental restoration. In particular, the incisal area 21 may be scalable in its width (between the mesial and distal side) to the width of the dental restoration (also between the mesial and distal side). Thereby the incisal area 21 may be scaled so that it entirely covers the labial side of the dental restoration model. The software may further allow to locally enhance and or reduce the incisal area 21 (for example by deforming) to cover any uncovered areas of the labial side of the dental restoration model. This may be performed by computer aid or manually.

The skilled person will recognize other possibilities for aligning, scaling and deforming the incisal area 21 and the dental restoration model 30, for example by manual operation.

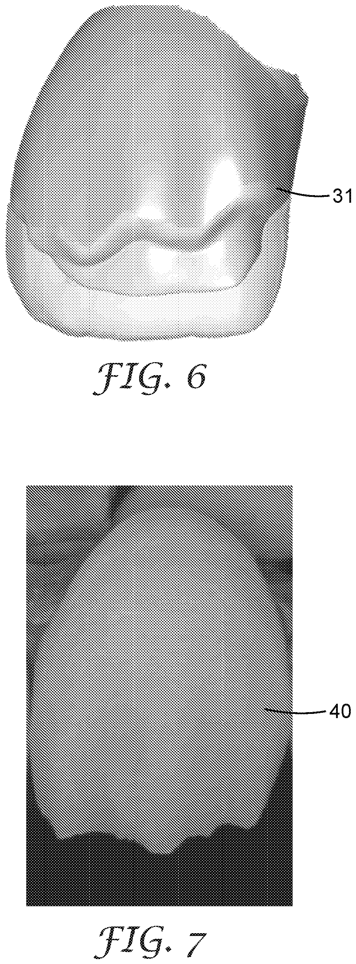

Once the incisal area 21 is superimposed with the outer labial surface of the dental restoration model 30, the dental restoration model 30 is recessed in the area covered by the incisal area 21, and thereby a reduced dental restoration model (shown in Fig. 6) is created.

This may be performed by creating a parallel offset of the incisal area 21 and virtually cutting away the portion of the dental restoration model 30 between that offset and the incisal area 21. The offset or recessing may be modified (for example automatically) to taper or flatten in a direction toward outer contours of the incisal area 21. In particular such tapers may be provided adjacent the mesial and distal sides as well as the contour opposite of the incisal edge of the incisal area 21. The tapering may for example by based on a radius (or similar curve) having a tangent on the incisal edge 21 and which cuts the offset. Thus a smooth transition between the incisal portion and the remainder of the dental restoration can be created. Therefore, any sharp transitions (for example optical transitions) between the incisal portion and the reminder of the dental restoration may be minimized.

The initial dental restoration model 30 may be provided by design on a dental CAD system. Software for a dental CAD system is for example available under the designation Lava™ Design Software 7 from 3M Deutschland GmbH. Various methods for designing dental restorations are available for the skilled person. In the present example a three-dimensional virtual model of at least a part of the patient's dentition may be captured, for example by an optical scanner. Based on the so captured patient's dentition model may be designed by computer aid. The design may be based on a virtual standard tooth obtained from a database holding a plurality of virtual standard teeth. The virtual standard tooth may be resized, deformed, locally extended and/or reduced to create the dental restoration model.

Fig. 6 shows the (still virtual) reduced dental restoration model 31. The virtual reduced dental restoration model 31 in the example exported in the form of a dataset (for example in a STL data format or another appropriate data format) to a machine for machining dental restorations. Such a machine may be a build-up machine, for example on which can build up a dental restoration in the form of a precursor from multiple powder layers. The dental restoration precursor may be subsequently sintered to create the reduced dental restoration. Alternatively, a stereo lithography machine may be used for directly building up the reduced dental restoration, for example from a hardenable resin. Further, a milling or grinding machine may be used for machining the reduced dental restoration from a pre-sintered or sintered ceramic blank.

The ceramic as used for making the reduced dental restoration may be a dental zirconia material. The shading of reduced dental restoration can be determined by selecting the material in the appropriate color grade. For example a uniformly or non-uniformly color shaded block may be used for machining the reduced dental restoration, or a colored reduced dental restoration may be built up by a method as described and claimed in WO 2013/095968 A1.

To finish the dental restoration the recessed portion of the reduced dental restoration is filled with a dental enamel material (not illustrated). Such a dental enamel material is for example available under the designation Sinfony™ from 3M Deutschland GmbH. For example a dental technician manually applies the dental enamel material in one or more layers of one or more different color shadings. Due to the recessed portion in the reduced dental restoration, which is visible to the dental technician or other user, the positioning of the dental enamel material is facilitated. Fig. 7 shows the final dental restoration 40.

The skilled person will appreciate that the design of the initial dental restoration, on the one hand, and the creation of the incisal area from the reference tooth, on the other hand, may be performed sequentially in any order, partially sequentially or in parallel.

## Claims

1. A method of making a dental restoration, comprising the steps of:
providing a three-dimensional virtual model (30) of a dental restoration representing at least a final outer surface of the dental restoration; separate therefrom,
providing a three-dimensional virtual model of an anterior incisal portion of a patient's tooth, wherein the three-dimensional virtual model of the anterior incisal portion in two dimensions is based on a two-dimensional virtual incisal area model and in the third dimension on a predetermined offset of the two-dimensional virtual incisal area model;
superimposing the virtual model (30) of the dental restauration and the virtual model of the anterior incisal portion;
automatically recessing the virtual model (30) of the dental restauration (30) in which the virtual model (30) of the dental restauration and the virtual model of the anterior incisal portion are superposed, and thereby creating a reduced virtual dental restoration model (31);
transmitting data representative of the reduced virtual dental restoration model (31) to a machine for manufacturing dental restorations;
manufacturing a dental restoration precursor or a reduced dental restoration based on the data; and
manually adding a material layer to the reduced dental restoration, thus providing the reduced dental restoration with an incisal layer, and thereby creating the dental restoration (40)

2. The method of claim 1, wherein the step of recessing is based on three-dimensionally subtracting the virtual model of the anterior incisal portion from the virtual model (30) of the dental restauration.

3. The method of claim 1 or 2, further comprising the steps of capturing an image of the patient's tooth and, based thereon, creating the virtual incisal area model.

4. The method of claim 3, further comprising the step of recognizing different translucency areas of the tooth and based thereon determining the virtual incisal area model.

5. The method of claim 3, further comprising the step of manually delineating an image of the incisal area of the patient's tooth and capturing the delineated image by means of a camera.

6. The method of any of the preceding claims, further comprising the step of capturing a three-dimensional virtual model of at least a part of the patient's dentition.

7. The method of claim 6, further comprising the step of designing the virtual model (30) of the dental restoration by computer aid.

8. The method of claim 7, wherein the design of the virtual model (30) of the dental restauration is based on a model of a tooth to be restored within the patient's dentition model, and wherein the tooth to be restored is a neighboring or opposing tooth of the patient's tooth which the virtual model of the anterior incisal portion is based on.

9. The method of any of the preceding claims, wherein the step of manufacturing the dental restoration precursor or the reduced dental restoration is performed by a material build-up or a material removal process.

10. The method of any of the preceding claims, further comprising the step of providing a ceramic material selected from among a zirconium oxide or aluminum oxide material.

11. The method of claim 10, further comprising the step of sintering the dental restoration precursor and thereby providing a sintered dental restoration precursor.

12. The method of any of the preceding claims, further wherein the added material layer is made of a polymer based dental enamel material.

## Patentansprüche

1. Verfahren zur Herstellung einer Zahnrestauration, umfassend die folgenden Schritte:
Bereitstellen eines dreidimensionalen virtuellen Modells (30) einer Zahnrestauration, die mindestens eine abschließende Außenoberfläche der Zahnrestauration darstellt; getrennt davon,
Bereitstellen eines dreidimensionalen virtuellen Modells eines vorderen Schneideabschnitts eines Zahns eines Patienten, wobei das dreidimensionale virtuelle Modell des vorderen Schneideabschnitts in zwei Dimensionen auf einem zweidimensionalen virtuellen Schneidebereichmodell basiert und in der dritten Dimension auf einem vorbestimmten Offset des zweidimensionalen virtuellen Schneidebereichmodells basiert;
Überlagern des virtuellen Modells (30) der Zahnrestauration und des virtuellen Modells des vorderen Schneideabschnitts;
automatisches Absenken des virtuellen Modells (30) der Zahnrestauration (30), wobei das virtuelle Modell (30) der Zahnrestauration und das virtuelle Modell des vorderen Schneideabschnitts übereinander gelegt werden, und dadurch ein reduziertes virtuelles Zahnrestaurationsmodell (31) erzeugen;
Senden von Daten, die das reduzierte virtuelle Zahnrestaurationsmodell (31) darstellen, an eine Maschine zur Herstellung von Zahnrestaurationen;
Herstellen eines Zahnrestaurationsvorläufers oder einer reduzierten Zahnrestauration, die auf den Daten basiert; und
manuelles Hinzufügen einer Materialschicht zu der reduzierten Zahnrestauration, wodurch die reduzierte Zahnrestauration mit einer Schneideschicht bereitgestellt wird, und dadurch die Zahnrestauration (40) erzeugt wird.

2. Verfahren nach Anspruch 1, wobei der Schritt des Absenkens auf dem dreidimensionalen Subtrahieren des virtuellen Modells des vorderen Schneideabschnitts von dem virtuellen Modell (30) der Zahnrestauration basiert.

3. Verfahren nach Anspruch 1 oder 2, das ferner die Schritte des Erfassens eines Bildes des Zahns des Patienten und, darauf basierend, des Erzeugens des virtuellen Schneidebereichmodells umfasst.

4. Verfahren nach Anspruch 3, das ferner den Schritt des Erkennens unterschiedlicher Transluzenzbereiche des Zahns und, darauf basierend, des Bestimmens des virtuellen Schneidebereichmodells umfasst.

5. Verfahren nach Anspruch 3, das ferner den Schritt des manuellen Abgrenzens eines Bildes des Schneidebereichs des Zahns des Patienten und des Erfassens des abgegrenzten Bildes mittels einer Kamera umfasst.

6. Verfahren nach einem der vorstehenden Ansprüche, das ferner den Schritt des Erfassens eines dreidimensionalen virtuellen Modells von mindestens einem Teil des Gebisses des Patienten umfasst.

7. Verfahren nach Anspruch 6, das ferner den Schritt des Gestaltens des virtuellen Modells (30) der Zahnrestauration durch eine Computerunterstützung umfasst.

8. Verfahren nach Anspruch 7, wobei die Gestaltung des virtuellen Modells (30) der Zahnrestauration auf einem Modell eines Zahns basiert, der innerhalb des Gebissmodells des Patienten restauriert werden soll, und wobei der zu restaurierende Zahn ein benachbarter oder gegenüberliegender Zahn des Zahns des Patienten ist, auf dem das virtuelle Modell des vorderen Schneideabschnitts basiert.

9. Verfahren nach einem der vorstehenden Ansprüche, wobei der Schritt des Herstellens des Zahnrestaurationsvorläufers oder der reduzierten Zahnrestauration durch ein Materialaufbau- oder ein Materialentfernungsverfahren ausgeführt wird.

10. Verfahren nach einem der vorstehenden Ansprüche, das ferner den Schritt des Bereitstellens eines Keramikmaterials, das aus einem Zirkonoxid- oder Aluminiumoxidmaterial ausgewählt ist, umfasst.

11. Verfahren nach Anspruch 10, das ferner den Schritt des Sinterns des Zahnrestaurationsvorläufers umfasst, und dadurch Bereitstellen eines gesinterten Zahnrestaurationsvorläufers.

12. Verfahren nach einem der vorstehenden Ansprüche, wobei ferner die hinzugefügte Materialschicht aus einem Zahnschmelzmaterial auf Polymerbasis hergestellt ist.

## Revendications

1. Procédé de fabrication d'une restauration dentaire, comprenant les étapes consistant à :
fournir un modèle virtuel tridimensionnel (30) d'une restauration dentaire représentant au moins une surface externe finale de la restauration dentaire ; indépendamment de celui-ci,
fournir un modèle virtuel tridimensionnel d'une partie incisive antérieure d'une dent d'un patient, dans lequel le modèle virtuel tridimensionnel de la partie incisive antérieure en deux dimensions est basé sur un modèle virtuel bidimensionnel de zone incisive et dans la troisième dimension sur un décalage prédéterminé du modèle virtuel bidimensionnel de zone incisive ;
superposer le modèle virtuel (30) de la restauration dentaire et le modèle virtuel de la partie incisive antérieure ;
renfoncer automatiquement le modèle virtuel (30) de la restauration dentaire (30) dans lequel le modèle virtuel (30) de la restauration dentaire et le modèle virtuel de la partie incisive antérieure sont superposés, et en créant de ce fait un modèle virtuel réduit de restauration dentaire (31) ;
transmettre des données représentatives du modèle virtuel réduit de restauration dentaire (31) à une machine pour la fabrication de restaurations dentaires ;
fabriquer un précurseur de restauration dentaire ou une restauration dentaire réduite sur la base des données ; et
ajouter manuellement une couche de matière à la restauration dentaire réduite, en fournissant ainsi à la restauration dentaire réduite une couche incisive, et en créant de ce fait la restauration dentaire (40).

2. Procédé selon la revendication 1, dans lequel l'étape de renfoncement est basée sur une soustraction tridimensionnelle du modèle virtuel de la partie incisive antérieure par rapport au modèle virtuel (30) de la restauration dentaire.

3. Procédé selon la revendication 1 ou 2, comprenant en outre les étapes consistant à capturer une image de la dent du patient et, sur la base de celle-ci, créer le modèle virtuel de zone incisive.

4. Procédé selon la revendication 3, comprenant en outre l'étape de reconnaissance de différentes zones de translucidité de la dent et sur la base de celle-ci, la détermination du modèle virtuel de zone incisive.

5. Procédé selon la revendication 3, comprenant en outre l'étape de délimitation manuelle d'une image de la zone incisive de la dent du patient et de capture de l'image délimitée au moyen d'une caméra.

6. Procédé selon l'une quelconque des revendications précédentes, comprenant en outre l'étape de capture d'un modèle virtuel tridimensionnel d'au moins une partie de la dentition du patient.

7. Procédé selon la revendication 6, comprenant en outre l'étape consistant à dessiner le modèle virtuel (30) de la restauration dentaire par assistance informatique.

8. Procédé selon la revendication 7, dans lequel le dessin du modèle virtuel (30) de la restauration dentaire est basé sur un modèle d'une dent à restaurer au sein du modèle de dentition du patient, et dans lequel la dent à restaurer est une dent voisine ou opposée de la dent du patient sur laquelle est basé le modèle virtuel de la partie incisive antérieure.

9. Procédé selon l'une quelconque des revendications précédentes, dans lequel l'étape de fabrication du précurseur de restauration dentaire ou de la restauration dentaire réduite est effectuée par un processus d'accumulation de matière ou d'enlèvement de matière.

10. Procédé selon l'une quelconque des revendications précédentes, comprenant en outre l'étape de fourniture d'un matériau céramique choisi parmi un matériau d'oxyde de zirconium ou d'oxyde d'aluminium.

11. Procédé selon la revendication 10, comprenant en outre l'étape consistant à fritter le précurseur de restauration dentaire et à fournir de ce fait un précurseur de restauration dentaire fritté.

12. Procédé selon l'une quelconque des revendications précédentes, dans lequel en outre la couche de matière ajoutée est constituée d'un matériau d'émail dentaire à base de polymère.
